Europäisches Patentamt

European Patent Office

Office européen des brevets

(19)

(11) EP 1 708 427 A1

(12) EUROPEAN PATENT APPLICATION

(43) Date of publication:
04.10.2006 Bulletin 2006/40

(51) Int Cl.:
H04L 12/56 (2006.01)

(21) Application number: 05254615.7

(22) Date of filing: 25.07.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 30.03.2005 JP 2005096644

(71) Applicant: FUJITSU LIMITED
Kawasaki-shi,
Kanagawa 211-8588 (JP)

(72) Inventors:
• Murata, Syuuichi ,
c/o Fujitsu Limited
Kanagawa 211-8588 (JP)

• Otonari, Akihide ,
c/o Fujitsu Network Technologie
Kanagawa 222-0033 (JP)
• Shinohara, Chiaki ,
c/o Fujitsu Network Technolog
Kanagawa 222-0033 (JP)

(74) Representative: Gibbs, Christopher Stephen et al
HASELTINE LAKE
Imperial House,
15-19 Kingsway
London WC2B 6UD (GB)

(54) **Radio communication apparatus performing TFC selection processing in a W-CDMA communication system, and TFC selection method**

(57) The present invention provides a TFC (Transport Format Combination) selection method capable of performing appropriate TFC selection for a radio frame including a compressed frame. Both TFC state transition types based on the transmission power in a normal frame and the transmission power in a compressed frame are managed. At the time of performing TFC selection on a frame-by-frame basis, when the subsequent frame is the normal frame, the TFC selection control is performed using the state transition for the normal frame, while when the subsequent frame is the compressed frame, the TFC selection control is performed using the state transition for the compressed frame.

FIG. 8A

Maximum transmission power value Pmax

Normal frame  Compressed frame  Normal frame

EP 1 708 427 A1

**(Cont. next page)**

# FIG. 8B

Power value    TFCn

State transition based on the state
transition for the normal frame.

# FIG. 8C

Power value    TFCn

State transition based on the state
transition for the compressed frame.

# FIG. 8D

Power value TFCn-1

State transition based on the state
transition for the compressed frame.

**Description**

BACKGROUND OF THE INVENTION

1. Field of the Invention

The present invention relates to a radio communication apparatus performing TFC (transport format combination) selection processing in the UMTS (W-CDMA), and a TFC selection method therefor, and more particularly, a TFC selection method to be applied in a compressed mode, and a radio communication apparatus performing the method.

2. Description of the Related Art

In the UMTS (W-CDMA) technology, a plurality of transport channels having different information rates and QoS (quality of services) levels are mapped into one physical channel and transmitted. Transmission power and a modulation scheme are adaptively varied so as to enable the physical channel to have a certain quality according to the required QoS, against varied fading conditions.

Here, a basic unit for data transfer from a transport channel to a physical channel is termed "transport block", and a set of transport blocks for one transport channel is termed "transport block set".

Also, a transport block set on the transport channel is transferred to the physical channel at data transfer intervals termed "transmission time intervals" (TTI). A transfer format at this time is termed "transport format" (TF). The combination of the transport formats simultaneously transferable on the physical channel, namely, the combination of each transport format on the transport channel being mapped into one physical channel, is termed "transport format combination" (TFC) . When data are mapped for transfer on a physical channel, one TFC is selected, on a slot-by-slot basis, from among a plurality of TFC types. The TFC is then transferred to the physical channel.

To perform the above TFC selection control, a radio communication apparatus on the transmission side (for example, a mobile terminal) calculates an estimated transmission power value for each slot. At the time of connection, the radio communication apparatus compares on a slot-by-slot basis whether the above estimated transmission power value is larger, or smaller, than the maximum transmission power value [dBm] notified from the upper-level apparatus, and retains the comparison result. From the comparison results on each TFC frame-by-frame, for the most recent 30 slots (for example, one frame is constituted of 15 slots), the radio communication apparatus decides which state each TFC is laid in among three states; "Supported state", "Excess-power state" and "Blocked state". For this purpose, the above state transition is provided individually, on the basis of each TFC. Such state transition will be described later. In short, the Supported state and the Excess-power state are states in which the TFC concerned is transmittable, while the Blocked state is a state the TFC is not transmittable.

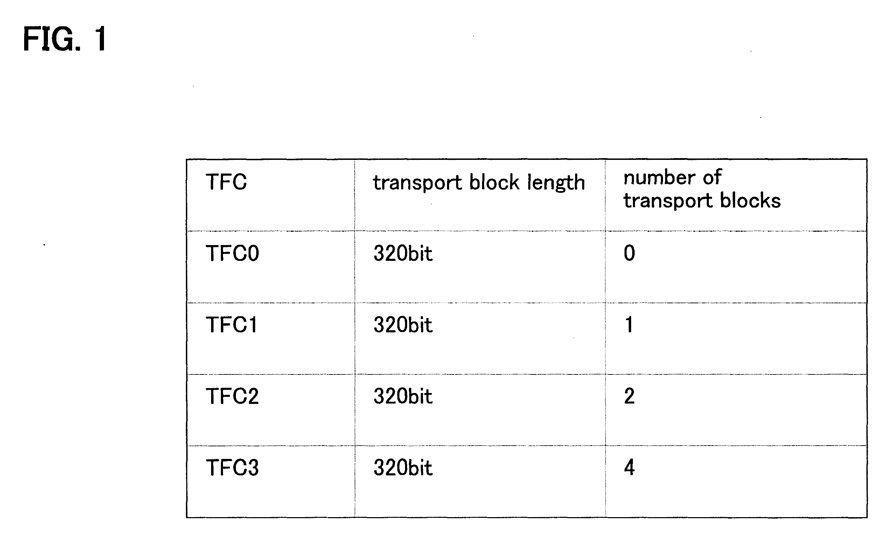

FIG. 1 is a diagram illustrating the TFC types. It is assumed that there are four types (TFC0, TFC1, TFC2 and TFC3) for a TFC transmittable on a certain transport channel, as shown in the figure. The TFC is decided frame by frame (10 msec) . On deciding a TFC type at each frame boundary, so as to transmit the TFC at a maximum TFC value to the possible extent, transmission processing is performed.

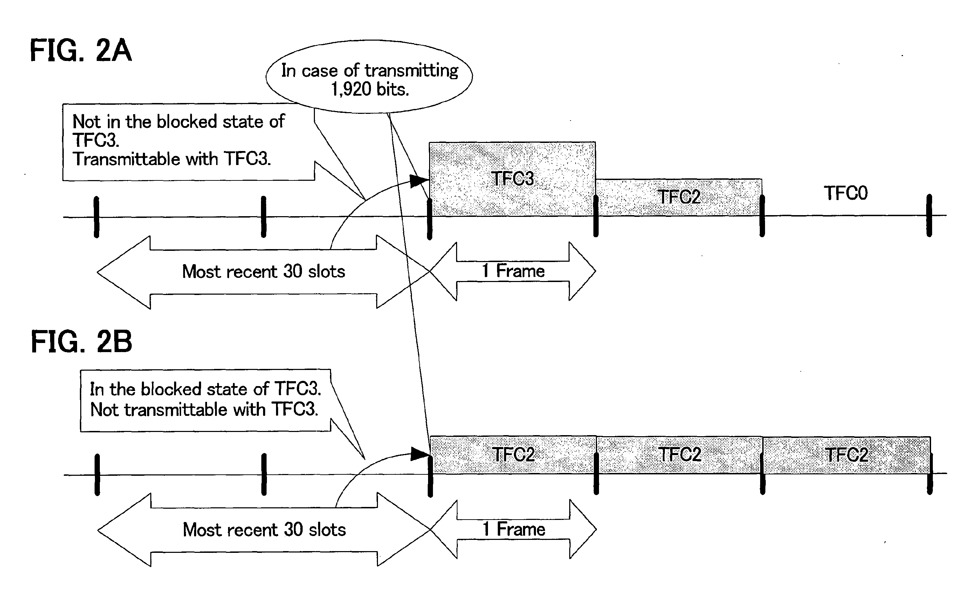

FIGS. 2A, 2B are diagrams illustrating an example of TFC selection processing. In FIG. 2A, when it is desired to transmit a data of 1,920 bits (= 320 bits X 6), since the transmittable number of bits in one frame (10 msec) is TFC3, namely 1,280 bits (= 320 bits x 4), the data of 1, 280 bits is transmitted at TFC3 in the first 10 msec period. In the subsequent 10 msec period, the data of 640 bits (TFC2: = 320 bits $\times$ 2) is transmitted. Thereafter, the state becomes 0-bit transmission (TFC0: = 320 bits $\times$ 0) (that is, no transmission data) . However, in FIG. 2B, at the time of the first data transmission (TFC3), as a result of the comparison for the most recent 30 slots, when the TFC selection control decides TFC3 is in a blocked state, it is not possible to transmit using TFC3. Therefore, the data is transmitted using the second largest TFC2 (on the assumption that TFC2 is not in a blocked state) . Also, in the next frame (10 msec) and the frame after next (10 msec), each data is transmitted using TFC2. In such a way, the data of 1,920 bits is transmitted.

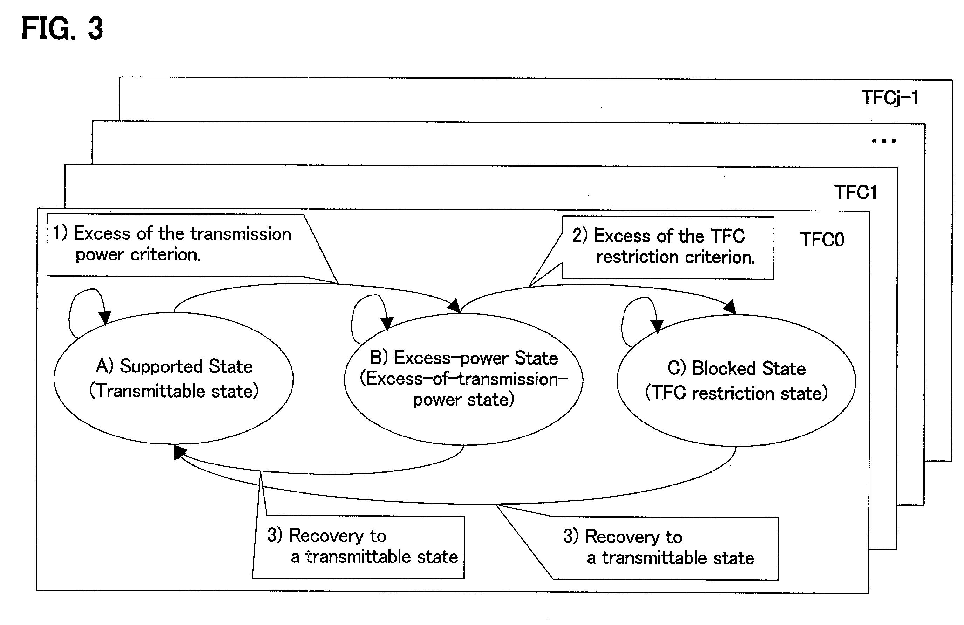

FIG. 3 is a diagram illustrating TFC state transition. As described above, TFC can take three states: A) Supported state; B) Excess-power state; and C) Blocked state. The definition of each state is described below:

A) Supported state (transmittable state)

A state in which an estimated transmission power value does not exceed the maximum transmission power value.

The TFC concerned is transmittable.

B) Excess-power state (excess-of-transmission-power state)

A state in which an estimate transmission power value exceeds the maximum transmission power value.
The TFC concerned is transmittable.

C) Blocked state (TFC restriction state)

A state in which the state of an estimated transmission power value exceeding the maximum transmission power value has continued for a certain period.
The TFC concerned is not transmittable.
Further, as to the transition between each states, there are three state transitions: 1) Excess of a transmission power criterion; 2) Excess of a TFC restriction criterion; and 3) Recovery to a transmittable state. The definition of each state transition is described below:

1) Excess of a transmission power criterion

Shift to this state occurs when an estimated transmission power value continues to be the maximum transmission power value, or more, for the duration of 15 slots, or more, out of the continuous measurement duration of 30 slots. The detection of the transition is performed on a frame-by-frame basis (at 10 msec intervals).

2) Excess of a TFC restriction criterion

Shift to this state occurs when a recovery condition to the transmittable state is not satisfied within the measurement duration, adjusting to a timing of the longest TTI. (The reason is that the transition is to be made after the transmission using the relevant TFC is completed, when the transmission is performed by use of the TFC before the restriction at the time of transition.)

3) Recovery to a transmittable state

Shift to this state occurs when an estimated transmission power value smaller than the maximum transmission power value continues for a continuous 30 slots.
Additionally, the above-mentioned standard (definition) in regard to the TFC selection control has been established by the 3GPP (3rd Generation Partnership Project), a project aiming at standardization of third-generation (3G) mobile communication systems including W-CDMA.
Now, in the 3GPP Specification with regard to the aforementioned TFC selection control, there is no description on the TFC selection control of a compressed frame at the time of the compressed mode.

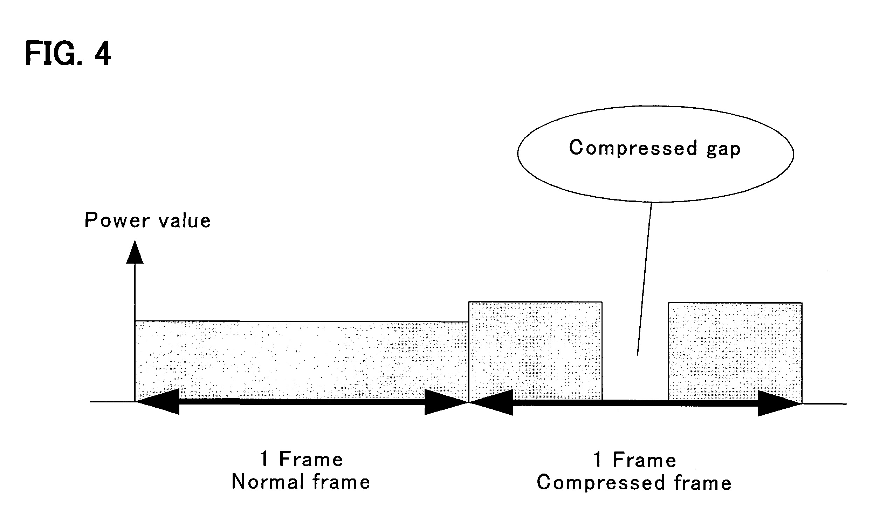

FIG. 4 is an explanation diagram illustrating a compressed frame in the compressed mode. As shown in this FIG. 4, the compressed frame has gap duration (compressed gap) in which no data is transmitted in the relevant frame, in addition to data transmission duration. In the duration in which a compressed frame data is transmitted, the power becomes higher than in a normal frame. More specifically, a power value in the compressed frame is incremented by ΔPilot to the power value in the normal frame, as described in the following.
After the start of DCH (dedicated channel), on receiving a compressed parameter from an upper-level layer, state transition is started. As to an estimated transmission power value at this time, the power of DPCCH (dedicated physical control channel) incremented by ΔPilot is needed. The DPCCH power is expressed by formula (1) shown below. Also, ΔPilot is obtained from formula (2) shown below, which can be acquired in advance at the time of receiving the compressed parameter.

$$\Delta DPCCH = \Delta TPC \times TPC\_cmd + \Delta Pilot \quad [dBm] \quad \ldots\ldots (1)$$

$$\Delta Pilot = 10\log_{10}(Npilot, normal/Npilot, compressed) [dB]$$

$$\ldots\ldots (2)$$

$$\Delta TPC = 1 \text{ dB}, TPC\_cmd = +1 \text{ or } -1$$

Further, as to Npilot in the formula (2), since the formula (2) is applied at the top of the compressed frame, Npilot,normal (Npilot in the normal frame) indicates a pilot in a normal frame, while Npilot,compressed (Npilot in the compressed frame) indicates a pilot in a compressed frame.

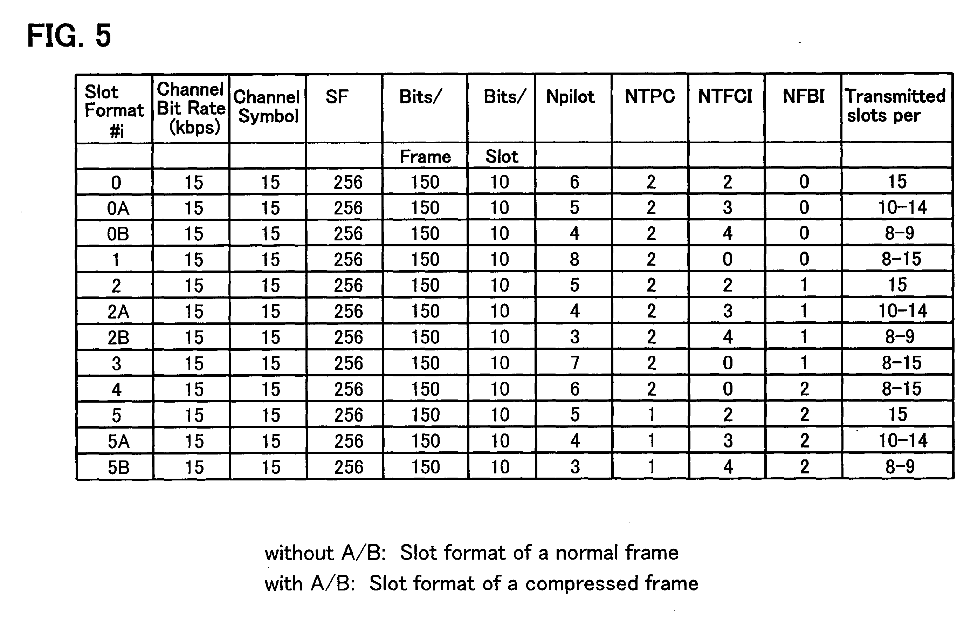

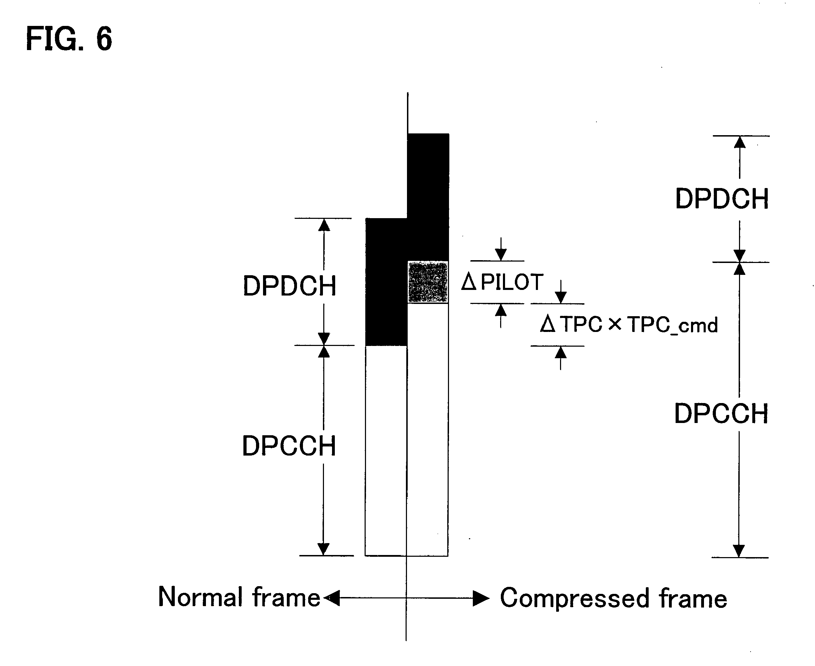

FIG. 5 is a diagram illustrating a DPCCH slot format table (Technical Specification 3GPP TS25.211). Also, FIG. 6 is a diagram illustrating power variation in a normal frame and a compressed frame. In FIG. 5, for example, when a slot frame "0" of a normal frame becomes a compressed frame, the slot format of the compressed frame concerned becomes either "0A" or "0B". (Here, A and B express a difference of the compressed modes, which are notified from the upper-level layer.) The Npilot value of the normal frame is greater than the Npilot value of the compressed frame. Therefore, the ΔPilot value is inevitably greater than 0. As a result, as shown in FIG. 6, the data (power) in the compressed frame is increased by at least ΔPilot, as compared with the power in the normal frame.

When such a compressed frame exists, because the power in the normal frame is different from the power in the compressed frame, an error is produced between the results of the TFC selection control before and after the frames concerned. More specifically, as one idea, if the power value is estimated on the assumption that the whole frames are normal frames, and the result is applied to the compressed frame, the following problem occurs.

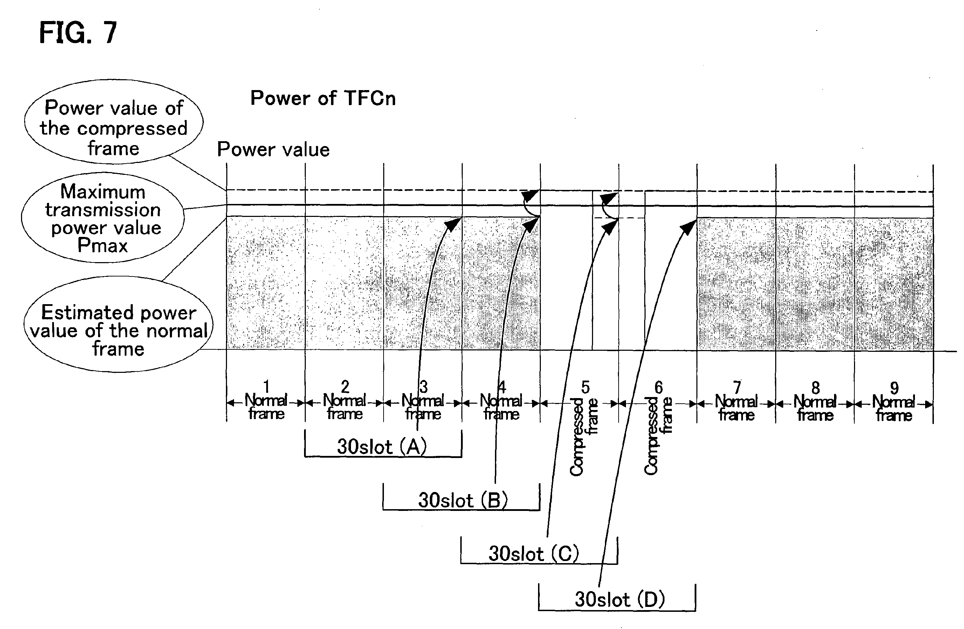

Namely, in FIG. 7, there is shown one idea of the TFC selection control in case that a frame includes a compressed frame. As shown in FIG. 7, for example, a situation is assumed such that the estimated power value of a normal frame is lower than a maximum transmission power value Pmax, and that the power value of a compressed frame is higher than the maximum transmission power value Pmax. For each TFC being transmitted in frame "4", the TFC selection control judges whether or not each TFC is in the blocked state by comparing the estimated power value with the Pmax in each slot included in 30 slots (A) of frames "2" and "3". In the above exemplary situation, because the estimated transmission power value in the 30 slots (A) transmitted in the frame "4" does not exceed the maximum transmission power value, TFCn does not fall in the blocked state. Therefore, it is possible to transmit the TFCn. (It can be estimated that the power will not exceed the maximum transmission power value virtually, when transmitting the TFCn.)

Subsequently, from the result of each slot included in 30 slots (B), the TFC selection control misjudges that the TFCn is transmittable in frame "5". However, because an increment of ΔPilot [dB] to the normal frame exists, the power exceeds the maximum transmission power value. (The increment of the compressed frame power value to the estimated power value of the normal frame is to be considered.) Similarly, when reflecting the result of each slot included in 30 slots (C) to frame "6", because of the increment of ΔPilot [dB] to the normal frame, the power exceeds the maximum transmission power value.

## SUMMARY OF THE INVENTION

Accordingly, it is an object of the present invention to provide a radio communication apparatus and a TFC selection method, capable of appropriately performing TFC selection control to a radio frame including a compressed frame.

According to the present invention to achieve the aforementioned object, there is provided a radio communication apparatus selecting one of a plurality of transport format combinations (TFCs) on the basis of a radio frame, and transmitting the selected transport format combination based on the radio frame. The radio communication apparatus includes: decision means for deciding a transitional state of each transport format combination in regard to whether each transport format combination is transmittable in a first radio frame (for example, a normal frame), and a second radio frame having a different type from the first radio frame (for example, a compressed frame); and selection means selecting a transport format combination which is transmittable in the first radio frame when a radio frame to be used for transmitting the transport format combination is the first radio frame, on the basis of each transport format combination state corresponding to the first radio frame decided by the decision means, and selecting a transport format combination which is transmittable in the second radio frame when a radio frame to be used for transmitting the transport format combination is the second radio frame, on the basis of each transport format combination state corresponding to the second radio frame decided by the decision means.

Further, for example, the above-mentioned decision means decides each transport format combination state corresponding to the first radio frame, based on transmission power of each transport format combination to be transmitted in the first radio frame, and decides each transport format combination state corresponding to the second radio frame, based on transmission power of each transport format combination to be transmitted in the second radio frame.

Still further, according to the present invention to achieve the aforementioned object, there is provided a transport format combination selection method for selecting one of a plurality of transport format combinations based on a radio frame, and transmitting the selected transport format combination based on the radio frame. The transport format combination selection method includes the steps of: deciding a transitional state of each transport format combination in regard to whether each transport format combination is transmittable in a first radio frame (for example, a normal frame) and a second radio frame (for example, a compressed frame) having a different type from the first radio frame; and selecting a transport format combination which is transmittable in the first radio frame when a radio frame to be used for transmitting the transport format combination is the first radio frame, on the basis of each transport format combination state corresponding to the first radio frame decided by the decision means, and also selecting a transport format combination which is transmittable in the second radio frame when a radio frame to be used for transmitting the transport format combination is the second radio frame, on the basis of each transport format combination state corresponding to the second radio frame decided by the decision means.

Further scopes and features of the present invention will become more apparent by the following description of the embodiments with the accompanied drawings.

BRIEF DESCRIPTION OF THE DRAWINGS

FIG. 1 shows a diagram illustrating TFC types.
FIGS. 2A and 2B show diagrams illustrating examples of TFC selection processing.
FIG. 3 shows an explanation diagram illustrating TFC state transition.
FIG. 4 shows an explanation diagram illustrating a compressed frame in the compressed mode.
FIG. 5 shows a diagram illustrating a DPCCH slot format table (3GPP TS25.211).
FIG. 6 shows a diagram illustrating power variation of a normal frame and a compressed frame.
FIG. 7 shows the conventional TFC selection control in case that a frame includes a compressed frame.
FIGS. 8A through 8D show diagrams illustrating exemplary processing of the TFC selection control according to an embodiment of the present invention.
FIG. 9 shows a TFC selection process flowchart according to an exemplary embodiment of the present invention.

DETAILED DESCRIPTION OF THE INVENTION

The preferred embodiment of the present invention is described hereinafter referring to the charts and drawings. However, it is noted that the technical scope of the present invention is not limited to the embodiments described below.
According to an exemplary embodiment of the present invention, a radio communication apparatus such as a mobile terminal manages both a TFC state transition based on the transmission power in a normal frame and a TFC state transition based on the transmission power in a compressed frame. At the time of performing TFC selection on a frame-by-frame basis, if the subsequent frame is a normal frame, TFC selection control is performed using the state transition for the normal frame, while if the subsequent frame is a compressed frame, TFC selection control is performed using the state transition for the compressed frame.
More specifically, in regard to the state transition for the normal frame, an initial DPCCH transmission power value is notified from the upper-level layer. It is regarded that each slot is a normal frame, and by adding ΔDPCCH shown below, the DPCCH power value in each slot is obtained.

$$\Delta DPCCH = \Delta TPC \times TPC\_cmd \ (\Delta TPC=1dB, \ TPC\_cmd= +1 \ or \ -1)$$

Further, power of DPDCH is obtained from the DPCCH power value and a gain factor calculated from each TFC format (transmission bit length). The total transmission power value of each slot is a sum of the DPCCH power value and the DPDCH power value.
By comparing the above total power value and the maximum transmission power value for each slot, each TFC state based on the state transition for the normal frame is decided.
Meanwhile, in regard to the state transition for the compressed frame, it is regarded that each slot is a compressed frame, and by adding ΔDPCCH shown below on a slot-by-slot basis, the power value in each slot of the compressed frame is obtained.

$$\Delta DPCCH = \Delta TPC \times TPC\_cmd + \Delta Pilot$$

Namely, as compared to the normal frame, the power value incremented by ΔPilot is obtained. Using this power value, each TFC state in the compressed frame is decided, similarly to the case of the normal frame.

As described above, each TFC state transition for the normal frame is obtained by regarding the whole frames as normal frames, based on the transmission power value in the normal frames. Also, each TFC state transition for the compressed frame is obtained by regarding the whole frames as the compressed frames, based on the transmission power value in the compressed frames. In case that the radio communication apparatus performs the TFC selection control, if the subsequent frame is a normal frame, the TFC of the subsequent frame is selected using the state transition for the normal frame, while if the subsequent frame is a compressed frame, the TFC of the subsequent frame is selected using the state transition for the compressed frame. In each the state transition for the normal frame and for the compressed frame, two types of state transitions are performed, on the basis of 1 frame = 15 slots (without considering the compressed gap.)

Also, as described above, the transmission power value in each slot of the compressed frame is greater than the transmission power value by ΔPilot. Accordingly, for each TFC, it is expected that a case of the transmission power value in the compressed frame exceeding the maximum transmission power value occurs more frequently than a case of the transmission power value in the normal frame exceeding the maximum transmission power value. Therefore, in the state transition for the compressed frame, each TFC state falls into the excess-power state or the blocked state more frequently than in the state transition for the normal frame. As compared to the case of the normal frame, because of easier transition to the blocked state, the TFC which does not exceed the maximum transmission power value even in case of the compressed frame is selected.

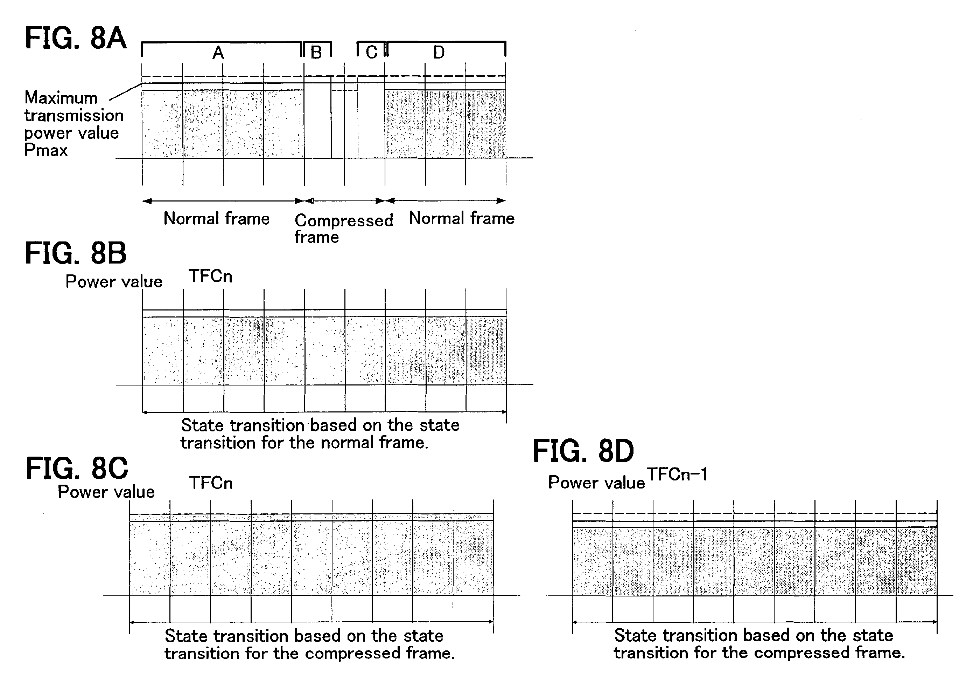

FIGS. 8A through 8D are diagrams illustrating exemplary processing of the TFC selection control according to the embodiment of the present invention. As shown in FIG. 8A, it is assumed that the transmission power of TFCn in a normal frame is smaller than the maximum transmission power value, while the transmission power of TFCn in a compressed frame exceeds the maximum transmission power value. FIG. 8B is a diagram illustrating the transmission power on the assumption that normal frames continue in TFCn. The state transition for the normal frame of TFCn is determined on the basis of the transmission power shown in FIG. 8B. Namely, in FIG. 8B, the transmission power value of TFCn is smaller than the maximum transmission power value. Therefore, in the state transition for the normal frame, TFCn lies in the supported state (transmittable state), and accordingly, the frame can be transmitted. At this time, for example, in case that the transmission power in the normal frame of TFCn+1 having higher transmission power than TFCn exceeds the maximum transmission power value, TFCn+1 falls in the blocked state (TFC restriction state) in the state transition for the normal frame. Accordingly, TFCn is selected, instead of TFCn+1. Here, if the state of TFCn+1 according to the state transition for normal frame is not the blocked state (TFC restriction state), TFCn+1 is selected.

FIG. 8C is a diagram illustrating the transmission power value on the assumption that compressed frames of TFCn continue. The state transition for the compressed frame of TFCn is decided on the basis of the transmission power value shown in FIG. 8C. Namely, in FIG. 8C, the transmission power value of TFCn exceeds the maximum transmission power value. Therefore, in the state transition for the compressed frame, the state of TFCn lies in the blocked state (TFC restriction state) . Accordingly, TFCn cannot be transmitted in the compressed frame. In contrast, FIG. 8D is a diagram illustrating the transmission power value on the assumption that compressed frames continue in TFCn-1. The state transition for the compressed frame of TFCn-1 is decided on the basis of the transmission power value shown in FIG. 8D. Namely, in FIG. 8D, the transmission power value of TFCn-1 is smaller than the maximum transmission power value. Therefore, in the state transition for the compressed frame, the state of TFCn-1 lies in the supported state (transmittable state). Accordingly, TFCn-1 is selected, because TFCn-1 can be transmitted in the compressed frame.

As a result, TFCn is selected in a normal frame section A, TFCn-1 is selected in compressed frame sections B and C, and again TFCn is selected in a normal frame section D. Thus, even in the compressed frames, TFC not exceeding the maximum transmission power value is selected.

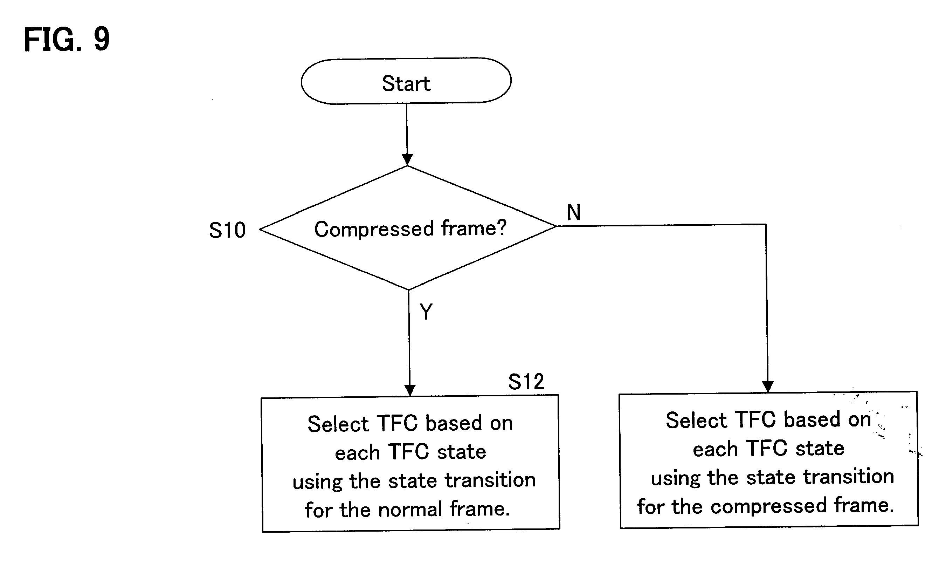

FIG. 9 is a TFC selection process flowchart according to an exemplary embodiment of the present invention. This process is executed by a TFC selection means in radio communication apparatus. For example, the TFC selection means is provided by a computer program, and executed in the CPU of the radio communication apparatus. First, whether a subsequent frame is a compressed frame is decided (S10), and if the subsequent frame is not a compressed frame (i.e. a normal frame), the TFC selection is performed according to each TFC state based on the state transition for the normal frame (S11), or if the subsequent frame is a compressed frame, the TFC selection is performed according to each TFC state based on the state transition for the compressed frame (S12).

In the 3GPP specification on W-CDMA, the TFC selection control is applied to an unlink signal from a mobile terminal to a base station. Therefore, the TFC selection method in accordance with the present invention is executed by a mobile terminal, as radio communication apparatus in the present invention. However, assuming that the TFC selection control is performed in the direction from the base station to the mobile terminal in future, the TFC selection control according to the present invention can also be applied to a downlink signal. In that case, the base station executes the TFC selection method, as radio communication apparatus according to the present invention.

To summarize, according to the present invention, as to a state for defining whether each transport format combination is transmittable, by preparing the states individually for the normal frame and for the compressed frame, an optimum transport format combination can be selected according to a radio frame type.

Further, by managing the TFC states for the normal frame and for the compressed frame independently, and at the time of the compressed frame, by performing the TFC selection based on the TFC state for the compressed frame, it becomes possible to suppress TFC selection exceeding the maximum transmission power.

The foregoing description of the embodiments is not intended to limit the invention to the particular details of the examples illustrated. Any suitable modification and equivalents may be resorted to the scope of the invention. All features and advantages of the invention which fall within the scope of the invention are covered by the appended claims.

**Claims**

1. A radio communication apparatus selecting one of a plurality of transport format combinations based on a radio frame, and transmitting said selected transport format combination based on the radio frame, and comprising:

   decision means deciding a transitional state of each transport format combination in regard to whether each transport format combination is transmittable in a first radio frame and a second radio frame having a different type from said first radio frame; and
   selection means selecting a transport format combination which is transmittable in the first radio frame when a radio frame to be used for transmitting the transport format combination is the first radio frame, on the basis of each transport format combination state corresponding to the first radio frame decided by the decision means, and selecting a transport format combination which is transmittable in the second radio frame when a radio frame to be used for transmitting the transport format combination is the second radio frame, on the basis of each transport format combination state corresponding to the second radio frame decided by the decision means.

2. The radio communication apparatus according to claim 1,
   wherein the first frame is a normal frame, and the second frame is a compressed frame.

3. The radio communication apparatus according to claim 1,
   wherein the decision means decides each transport format combination state corresponding to the first radio frame, based on transmission power of each transport format combination to be transmitted in the first radio frame, and decides each transport format combination state corresponding to the second radio frame, based on transmission power of each transport format combination to be transmitted in the second radio frame.

4. A transport format combination selection method, selecting one of a plurality of transport format combinations based on a radio frame, and transmitting said selected transport format combination based on the radio frame, comprising the steps of:

   deciding a transitional state of each transport format combination in regard to whether each transport format combination is transmittable in a first radio frame and a second radio frame having a different type from said first radio frame; and
   selecting a transport format combination which is transmittable in the first radio frame when a radio frame to be used for transmitting the transport format combination is the first radio frame, on the basis of each transport format combination state corresponding to the first radio frame decided by the decision means, and selecting a transport format combination which is transmittable in the second radio frame when a radio frame to be used for transmitting the transport format combination is the second radio frame, on the basis of each transport format combination state corresponding to the second radio frame decided by the decision step.

5. The transport format combination selection method according to claim 4,
   wherein the first frame is a normal frame, and the second frame is a compressed frame.

# FIG. 1

| TFC | transport block length | number of transport blocks |
|-----|------------------------|----------------------------|
| TFC0 | 320bit | 0 |
| TFC1 | 320bit | 1 |
| TFC2 | 320bit | 2 |
| TFC3 | 320bit | 4 |

EP 1 708 427 A1

# FIG. 2A

In case of transmitting 1,920 bits.

Not in the blocked state of TFC3.
Transmittable with TFC3.

TFC3

TFC2

TFC0

Most recent 30 slots

1 Frame

# FIG. 2B

In the blocked state of TFC3.
Not transmittable with TFC3.

TFC2

TFC2

TFC2

Most recent 30 slots

1 Frame

EP 1 708 427 A1

# FIG. 3

TFCj-1

···

TFC1

TFC0

1) Excess of the transmission power criterion.

2) Excess of the TFC restriction criterion.

A) Supported State (Transmittable state)

B) Excess-power State (Excess-of-transmission-power state)

C) Blocked State (TFC restriction state)

3) Recovery to a transmittable state

3) Recovery to a transmittable state

EP 1 708 427 A1

# FIG. 4

Compressed gap

Power value

1 Frame
Normal frame

1 Frame
Compressed frame

EP 1 708 427 A1

# FIG. 5

| Slot Format #i | Channel Bit Rate (kbps) | Channel Symbol | SF | Bits/ | Bits/ | Npilot | NTPC | NTFCI | NFBI | Transmitted slots per |
|---|---|---|---|---|---|---|---|---|---|---|
| | | | | Frame | Slot | | | | | |
| 0 | 15 | 15 | 256 | 150 | 10 | 6 | 2 | 2 | 0 | 15 |
| 0A | 15 | 15 | 256 | 150 | 10 | 5 | 2 | 3 | 0 | 10–14 |
| 0B | 15 | 15 | 256 | 150 | 10 | 4 | 2 | 4 | 0 | 8–9 |
| 1 | 15 | 15 | 256 | 150 | 10 | 8 | 2 | 0 | 0 | 8–15 |
| 2 | 15 | 15 | 256 | 150 | 10 | 5 | 2 | 2 | 1 | 15 |
| 2A | 15 | 15 | 256 | 150 | 10 | 4 | 2 | 3 | 1 | 10–14 |
| 2B | 15 | 15 | 256 | 150 | 10 | 3 | 2 | 4 | 1 | 8–9 |
| 3 | 15 | 15 | 256 | 150 | 10 | 7 | 2 | 0 | 1 | 8–15 |
| 4 | 15 | 15 | 256 | 150 | 10 | 6 | 2 | 0 | 2 | 8–15 |
| 5 | 15 | 15 | 256 | 150 | 10 | 5 | 1 | 2 | 2 | 15 |
| 5A | 15 | 15 | 256 | 150 | 10 | 4 | 1 | 3 | 2 | 10–14 |
| 5B | 15 | 15 | 256 | 150 | 10 | 3 | 1 | 4 | 2 | 8–9 |

without A/B:  Slot format of a normal frame
with A/B:  Slot format of a compressed frame

EP 1 708 427 A1

# FIG. 6

Normal frame ◄——————► Compressed frame

DPDCH

DPCCH

DPDCH

ΔPILOT

ΔTPC × TPC_cmd

DPDCH

DPCCH

EP 1 708 427 A1

## FIG. 7

**Power of TFCn**

Power value

Power value of the compressed frame

Maximum transmission power value Pmax

Estimated power value of the normal frame

| 1 Normal frame | 2 Normal frame | 3 Normal frame | 4 Normal frame | 5 Compressed frame | 6 Compressed frame | 7 Normal frame | 8 Normal frame | 9 Normal frame |

30slot (A)

30slot (B)

30slot (C)

30slot (D)

EP 1 708 427 A1

FIG. 8A

Maximum transmission power value Pmax

Normal frame | Compressed frame | Normal frame

FIG. 8B
Power value
TFCn

State transition based on the state transition for the normal frame.

FIG. 8C
Power value
TFCn

State transition based on the state transition for the compressed frame.

FIG. 8D
Power value TFCn−1

State transition based on the state transition for the compressed frame.

# FIG. 9

Start

S10 — Compressed frame? — N

Y

S12

Select TFC based on
each TFC state
using the state transition
for the normal frame.

Select TFC based on
each TFC state
using the state transition
for the compressed frame.

European Patent
Office

**EUROPEAN SEARCH REPORT**

Application Number

EP 05 25 4615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/043221 A (QUALCOMM INCORPORATED) 22 May 2003 (2003-05-22) * abstract * * paragraphs [1001], [1004] - paragraph [1005] * * paragraph [1008] - paragraph [1009] * * paragraph [1039] - paragraph [1045] * * paragraphs [1048], [1051] - paragraph [1053] * * paragraph [1056] - paragraph [1057] * * paragraph [1059] - paragraph [1061] * * paragraphs [1063], [1074] - paragraph [1076] * * paragraph [1078] - paragraph [1086] * * figures 3,4,7,9 * ----- | 1-5 | INV. H04L12/56 |
| A | "Universal Mobile Telecommunications System (UMTS); Medium Access Control (MAC) protocol specification (3GPP TS 25.321 version 6.3.0 Release 6); ETSI TS 125 321" ETSI STANDARDS, EUROPEAN TELECOMMUNICATIONS STANDARDS INSTITUTE, SOPHIA-ANTIPO, FR, vol. 3-R2, no. V630, December 2004 (2004-12), XP014027655 ISSN: 0000-0001 * page 58, paragraph 11.4 - page 60, paragraph 11.4 * * figure 11.4.1 * ----- -/-- | 1-5 | TECHNICAL FIELDS SEARCHED (IPC) H04L H04Q |

The present search report has been drawn up for all claims

| Place of search | Date of completion of the search | Examiner |
|---|---|---|
| Munich | 6 July 2006 | Rosenauer, H |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................

& : member of the same patent family, corresponding
document

EPO FORM 1503 03.82 (P04C01)

**European Patent Office**

**EUROPEAN SEARCH REPORT**

Application Number

EP 05 25 4615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/020465 A (QUALCOMM INCORPORATED; MALLADI, DURGA PRASAD; WILLENEGGER, SERGE D) 3 March 2005 (2005-03-03) <br> * abstract * <br> * paragraphs [0006], [0021] - paragraph [0022] * <br> * paragraph [0029] - paragraph [0033] * <br> * paragraph [0035] - paragraph [0039] * <br> * paragraph [0056] - paragraph [0061] * <br> * paragraphs [0073], [0075] - paragraph [0076] * <br> * figure 4 * | 1,4 | |
| A | SIEMENS: "Compressed Mode for EDCH" 3GPP TSG RAN WG1#40, R1-050135, [Online] 14 February 2005 (2005-02-14), pages 1-4, XP002388648 <br> Retrieved from the Internet: <br> URL:http://www.3gpp.org/ftp/tsg_ran/WG1_RL 1/TSGR1_40/Docs/> <br> [retrieved on 2006-07-06] <br> * the whole document * | 1-5 | |
| A | MITSUBISHI ELECTRIC: "On E-TFC selection scheme" 3GPP TSG RAN WG2 #46, R2-050387, [Online] 14 February 2005 (2005-02-14), pages 1-3, XP002388649 <br> Retrieved from the Internet: <br> URL:http://www.3gpp.org/ftp/tsg_ran/WG2_RL 2/TSGR2_46/Documents/> <br> [retrieved on 2006-07-06] <br> * the whole document * | 1-5 | TECHNICAL FIELDS SEARCHED (IPC) |

The present search report has been drawn up for all claims

| Place of search | Date of completion of the search | Examiner |
|---|---|---|
| Munich | 6 July 2006 | Rosenauer, H |

## ANNEX TO THE EUROPEAN SEARCH REPORT
## ON EUROPEAN PATENT APPLICATION NO.

EP 05 25 4615

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2006

| Patent document cited in search report | | Publication date | Patent family member(s) | | Publication date |
|---|---|---|---|---|---|
| WO 03043221 | A | 22-05-2003 | BR | 0214078 A | 07-12-2004 |
| | | | CA | 2466910 A1 | 22-05-2003 |
| | | | CN | 1613200 A | 04-05-2005 |
| | | | EP | 1444791 A1 | 11-08-2004 |
| | | | JP | 2005510120 T | 14-04-2005 |
| | | | MX | PA04004512 A | 10-09-2004 |
| | | | US | 2004233899 A1 | 25-11-2004 |
| | | | US | 2003092382 A1 | 15-05-2003 |
| WO 2005020465 | A | 03-03-2005 | AU | 2004302558 A1 | 03-03-2005 |
| | | | CA | 2535862 A1 | 03-03-2005 |
| | | | EP | 1661262 A1 | 31-05-2006 |
| | | | US | 2005117559 A1 | 02-06-2005 |

EPO FORM P0459

For more details about this annex : see Official Journal of the European Patent Office, No. 12/82